# EUROPÄISCHE PATENTSCHRIFT

(11) **EP 2 852 725 B1**
(45) Veröffentlichungstag und Bekanntmachung des Hinweises auf die Patenterteilung: **22.03.2017**
(21) Anmeldenummer: 13729583.8
(22) Anmeldetag: 07.05.2013
(51) Int. Cl.: E05B 81/76

(54) **BETÄTIGUNGSELEMENT FÜR EIN KRAFTFAHRZEUG**
OPERATING ELEMENT FOR A MOTOR VEHICLE
ÉLÉMENT DE COMMANDE POUR VÉHICULE À MOTEUR

(30) Priorität: 23.05.2012 DE 102012010095
(43) Veröffentlichungstag der Anmeldung: 01.04.2015
(73) Patentinhaber: Huf Hülsbeck & Fürst GmbH & Co. KG, 42551 Velbert (DE)
(72) Erfinder: GOREKI, Thomas, 45473 Mülheim (DE)
(86) Internationale Anmeldenummer: PCT/DE2013/000254
(87) Internationale Veröffentlichungsnummer: WO 2013/174360

(56) Entgegenhaltungen:
- EP-A1- 1 533 451
- DE-B3-102005 034 763
- DE-U1- 20 317 635

## Beschreibung

Die Erfindung betrifft ein Betätigungselement für ein Kraftfahrzeug aufweisend ein Gehäuse und eine Abdeckung, welche an dem Gehäuse angeordnet ist, wobei bei einer Betätigung der Abdeckung ein dem Betätigungselement zugeordnetes Schaltelement zur Aktivierung eines kraftfahrzeugseitigen Schlosses betätigbar ist und das Gehäuse mindestens eine erste Aufnahme aufweist, welche zum Anschluss eines ersten elektrischen Steckelements dient, welches das Schaltelement mit einer Steuer- und/oder Auswerteeinheit verbindet.
Aus dem Stand der Technik sind Betätigungselemente mit einem Gehäuse und einer Abdeckung bekannt, welche beispielsweise in einer Heckleiste eines Kraftfahrzeugs angeordnet sind. Diese Betätigungselemente weisen lediglich eine Aufnahme zum Anschluss eines Steckelements auf, welcher einen in dem Gehäuse angeordneten Mikrotaster mit einer Steuereinheit elektrisch verbindet. Heckleisten weisen unter anderem Beleuchtungselemente auf, welche zur Beleuchtung des Nummerschilds dienen. Die Beleuchtungselemente sind in der Heckleiste angeordnet und werden über separate Anschlüsse mit einer Stromversorgung verbunden. Das Betätigungselement und die Beleuchtungselemente müssen folglich separat mit einem im Fahrzeug angeordneten Kabelbaum verbunden werden. Ein Anschluss der Beleuchtungselemente mit dem Betätigungselements ist daher unmöglich, da es sich bei den beiden Bauteilen um zwei autarke Vorrichtungen handelt.
Ferner ist aus dem Stand der Technik die EP1533451A1 bekannt, welche ein Kombinationsgehäuse offenbart, in welchem eine als Leuchte ausgebildete Funktionseinheit und eine Handhabe angeordnet sind.
Die Aufgabe der vorliegenden Erfindung ist es, ein kostengünstiges Betätigungselement bereitzustellen, welches elektrisch mit einem Verbraucher verbunden werden kann.
Die Aufgabe der Erfindung wird dadurch gelöst, dass das Gehäuse mindestens eine zweite Aufnahme aufweist, welche zum Anschluss eines zweiten Steckelements dient, welches mit einem ersten Verbraucher verbunden ist.

Mit Hilfe einer zweiten Aufnahme kann ein Verbraucher direkt mit dem Betätigungselement elektrisch verbunden werden, so dass eine kompakte Baueinheit entsteht. Dies ist vor allem vorteilhaft, wenn eine Vormontage erfolgt. So kann beispielsweise die aus dem Verbraucher und dem Betätigungselement umfassende Baueinheit in einer Heckleiste angeordnet werden. Die Heckleiste weist lediglich nur einen Anschluss auf, welcher durch die erste Aufnahme des Betätigungselements gebildet wird. Die kompakte Heckleiste kann sicher zum Ort der Endmontage transportiert und kann von einem Werker in die Heckklappe montiert werden, wobei der Werker nur den ersten Anschluss des Betätigungselements mit einem Steckelement verbinden muss. Er kann auf die komplizierte Verkabelung der Verbraucher in der Heckleiste mit einem im Fahrzeug angeordneten Kabelbaum in vorteilhafterweise verzichten. Durch die schnelle und einfache Montage, werden die Montagekosten erheblich reduziert, weil die einfache Vormontage des Betätigungselements mit dem Beleuchtungselement bereits zuvor stattgefunden hat.

Nach einer bevorzugten Ausführungsform der Erfindung ist vorgesehen, dass das Gehäuse eine dritte Aufnahme aufweist, welche zum Anschluss eines dritten Steckelements dient, welcher mit einem zweiten Verbraucher verbunden ist. Die Einsatzmöglichkeiten für das Betätigungselement werden dadurch in vorteilhafterweise erhöht. Wenn ein zweiter Verbraucher benötigt wird, lässt sich dieser unkompliziert an das Betätigungselement anschließen, so dass auch bei einem zweiten Verbraucher eine kompakte Baueinheit aufweisend das Betätigungselement und mindestens einen Verbraucher gewährleistet wird.

Sehr einfach lässt sich der Anschluss eines Verbrauchers an das Betätigungselement realisieren, wenn der Verbraucher als Lichtquelle, insbesondere als LED, ausgebildet ist. Die LED ist besonders gut geeignet, weil die Steckelemente zur Verbindung des Betätigungselements mit der LED einen relativ kleinen Durchmesser aufweisen, so dass auch der Durchmesser der zweiten bzw. dritten Aufnahme zum Anschluss der Steckelemente nur einen geringen Durchmesser dann aufweisen müssen. Im Ergebnis weist das Betätigungselement eine noch kompaktere Form auf. Ferner ist der Stromverbrauch der LED geringer als bei einem herkömmlichen Glühlämpchen. Allerdings lässt sich ein Glühlämpchen im Vergleich zu einer LED einfacher austauschen, weil es lediglich aus der dem Glühlämpchen zugeordneten Fassung herausgedreht werden muss, wobei LEDs in der Regel als wartungsfrei gelten.

Nach einer weiteren bevorzugten Ausführungsform der Erfindung ist vorgesehen, dass die Steuereinheit für den ersten und/oder zweiten Verbraucher innerhalb des Gehäuses in einem Innenraum des Betätigungselements angeordnet ist. Dies bietet den Vorteil, dass die Steuereinheit sicher gegen äußere Einflüsse geschützt ist und das Betätigungselement kompakt ausgebildet ist. Insbesondere, wenn der durch die Abdeckung und das Gehäuse gebildete Innenraum des Betätigungselements wasser- und/oder staubdicht gegenüber der Umwelt geschützt ist, ist es sehr vorteilhaft, wenn die Steuereinheit innerhalb des Betätigungselements angeordnet ist. Es ist ebenfalls denkbar, die Steuereinheit und den Mikrotaster zusätzlich in Vergussmasse einzubetten.

Nach einer weiteren bevorzugten Ausführungsform der Erfindung ist vorgesehen, dass die erste Aufnahme und/oder die zweite Aufnahme und/oder die dritte Aufnahme elektrisch, insbesondere über ein Stanzgitter oder über auf einer Leiterplatte angeordnete Leiterbahnen, miteinander verbunden sind. Dabei sollte die Leiterplatte oder das Stanzgitter fest mit dem Gehäuse verbunden sein, beispielsweise durch Verklipsen oder Einspritzen. Ferner kann in vorteilhafterweise auf eine umfangreiche Verkabelung außerhalb des Betätigungselements verzichtet werden, so dass die Montage des Betätigungselements, beispielsweise in eine Heckleiste, erheblich erleichtert wird. Darüber hinaus muss nur noch die erste Aufnahme des Betätigungselements über ein Steckelement mit dem Kabelbaum eines Kraftfahrzeugs verbunden werden. Die Leiterplatte weist den weiteren Vorteil auf, dass auf dieser die Steuereinheiten der LEDs angeordnet werden können. Dies führt zu einem multifunktionalen Betätigungselement, welches einerseits zum Aktivieren des kraftfahrzeugseitigen Schlosses dient, und andererseits ein Teil der Beleuchtungseinheit umfasst.

Es ist von Vorteil, wenn die zweite und/oder dritte Aufnahme an einer Seitenwand des Gehäuses und/oder an einer Bodenwand des Gehäuses angeordnet ist. Abhängig vom Bauraum, in welchem das Betätigungselement angeordnet werden soll, kann so ein kompaktes Betätigungselement gebildet werden.

Nach einer bevorzugten Ausführungsform der Erfindung ist vorgesehen, dass die Verbraucher in Reihe oder parallel zueinander geschaltet sind. Bei einer parallelen Schaltung ist sichergestellt, dass auch bei Ausfall eines Verbrauchers, beispielsweise bei einem Ausfall einer Lichtquelle, der andere Verbraucher weiterhin funktioniert.
Bei der Verwendung einer Reihenschaltung, kann die Steuereinheit auf einer Leiterplatte angeordnet werden, wenn als Lichtquelle, insbesondere eine LED verwendet wird.

Sehr kostengünstig und komfortabel ist der konstruktive Aufbau des Betätigungselements, wenn das Schaltelement als Mikroschalter oder als kapazitiver Näherungsschalter ausgebildet ist. Im Falle der Verwendung eines kapazitiven Näherungsschalters, wird weniger Bauraum innerhalb des Betätigungselements benötigt, weil als kapazitiver Näherungsschalter lediglich ein Metalldraht und ein Metallblech benötigt wird. Wenn ein mit einem Knackfrosch versehener Mikrotaster verwendet wird, erhält der Benutzer eine taktile Rückmeldung bei der Benutzung des Betätigungselements.

Die Erfindung wird anhand von zwei Ausführungsbeispielen näher erläutert. Die Figuren zeigen:
- Figur 1: ein erfindungsgemäßes Betätigungselement in einer Ansicht schräg von oben gemäß einer ersten Ausführungsform,
- Figur 2: das Betätigungselement in einer Ansicht schräg von unten gemäß der ersten Ausführungsform,
- Figur 3: eine Leiterplatte für das Betätigungselement gemäß der ersten Ausführungsform in einer Draufsicht
- Figur 4: die Leiterplatte für das Betätigungselement gemäß der ersten Ausführungsform in einer Ansicht von schräg unten
- Figur 5: die Leiterplatte für das Betätigungselement gemäß der ersten Ausführungsform in einer Seitenansicht
- Figur 6: ein erfindungsgemäßes Betätigungselement in einer Ansicht schräg von oben gemäß einer zweiten Ausführungsform,
- Figur 7: das Betätigungselement in einer Ansicht schräg von unten gemäß der zweiten Ausführungsform,

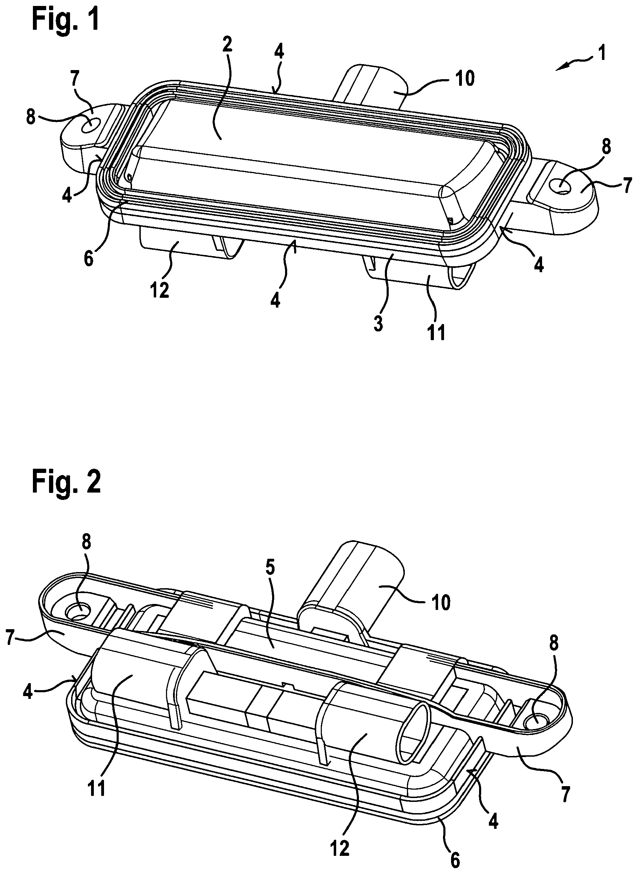

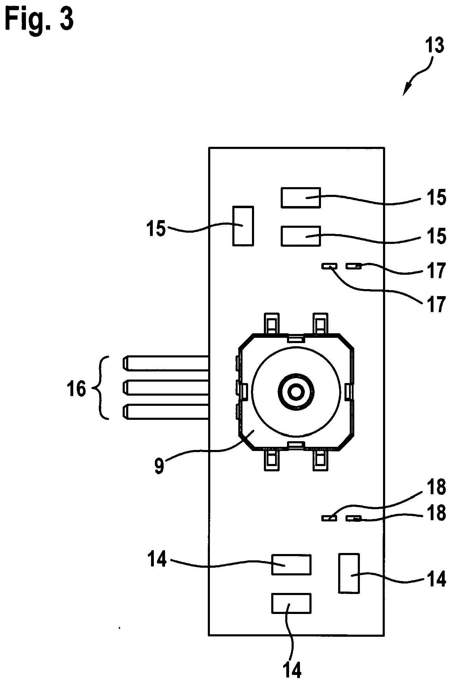

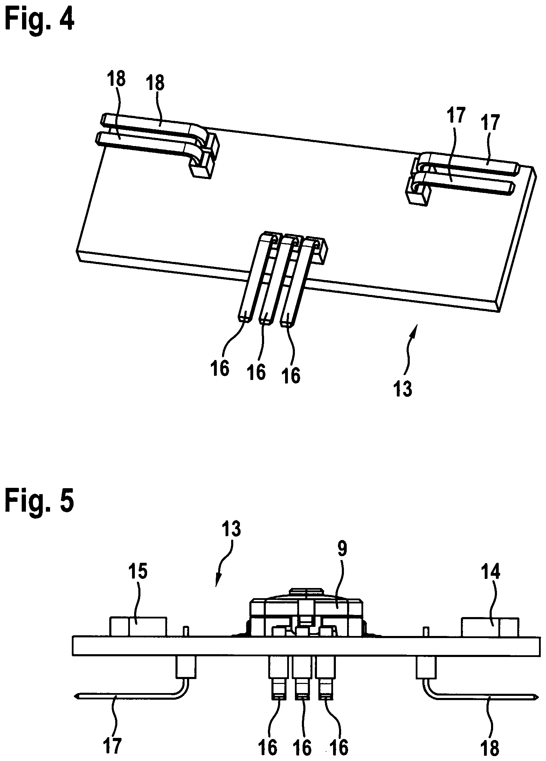

In der Figur 1 und in der Figur 2 ist ein Betätigungselement 1 gemäß einer ersten Ausführungsform dargestellt, welches eine Abdeckung 2 und ein Gehäuse 3 aufweist. Das Gehäuse umfasst vier Seitenwände 4 und eine Bodenwand 5. Die aus Kunststoff ausgebildete Abdeckung 2 umfasst einen aus einem Elastomer elastisch ausgebildeten Kragen 6, welcher wasser- und staubdicht mit dem Gehäuse 3 verbunden ist. An dem Gehäuse 2 sind zwei Laschen 7 mit Öffnungen 8 angeordnet, welche zur Befestigung des Betätigungselements 1, beispielsweise an einer Heckleiste für ein Kraftfahrzeug, dienen. Zur Befestigung werden zwei nicht näher dargestellte Schrauben verwendet, welche durch die Öffnungen 8 der Laschen 7 hindurchgeführt werden müssen. Die Laschen 7 stehen seitlich von zwei gegenüber angeordneten Seitenwänden 4 hervor. Die Laschen 7 könnten alternativ auch an der Bodenwand 5 angeordnet sein. Ein gegenüber Feuchtigkeit und Staub geschützter Innenraum des Betätigungselements 1 wird durch das Gehäuse 3 aufweisend die vier Seitenwänden 4 und die Bodenwand 5 sowie durch die Abdeckung 2 gebildet. Im Innenraum innerhalb des Betätigungselements 1 ist ein als Mikroschalter ausgebildetes Schaltelement 9 angeordnet, wobei bei einer Betätigung der Abdeckung 2 das dem Betätigungselement 1 zugeordnete Schaltelement 9 zur Aktivierung eines kraftfahrzeugseitigen Schlosses betätigbar ist. Das Gehäuse 3 weist eine erste Aufnahme 10 auf, welche zum Anschluss eines ersten elektrischen nicht näher dargestellten Steckelements dient, welches das Schaltelement 9 mit einer Steuer- und/oder Auswerteeinheit verbindet. Ferner umfasst das Gehäuse 2 eine zweite Aufnahme 11 und eine dritte Aufnahme 12, welche jeweils zum Anschluss eines nicht näher gezeigten zweiten Steckelements bzw. dritten Steckelements dient. Gemäß dem in den Figuren 1 und 2 visualisierten Ausführungsbeispiel sind die zweite Aufnahme 11 und dritte Aufnahme 12 an der Bodenwand 5 des Gehäuses 3 angeordnet bzw. angespritzt. Das zweite und das dritte Steckelement sind jeweils mit einem als Lichtquelle ausgebildeten Verbraucher verbunden. Im vorliegenden Ausführungsbeispiel werden als Lichtquellen LEDs verwendet, die beispielsweise zur Kennzeichenbeleuchtung eines Kraftfahrzeugs dienen. Alternativ können aber auch Glühlämpchen als Verbraucher verwendet werden. In den Figuren 3 bis 5 ist eine Leiterplatte 13 abgebildet, welche sich innerhalb des Gehäuses 3 des Betätigungselement 1 befindet. Die Leiterplatte 13 ist dabei formschlüssig und/oder kraftschlüssig und/oder stoffschlüssig in dem Gehäuse 3 angeordnet. Um die Leiterplatte 13 weiter gegen Feuchtigkeit zu schützen, ist es möglich, die Leiterplatte 13 in einer Vergussmasse einzubetten. Dazu sollte die Leiterplatte 13 in einer separaten in dem Gehäuse 3 angeordneten Kammer angeordnet sein. Dabei kann die Vergussmasse als Halte- und/oder Abdichtelement dienen. Alternativ zu einer Leiterplatte 13 könnte man auch ein Stanzgitter in dem Gehäuse 3 anordnen, welches bei der Herstellung des Gehäuses 3 in dieses eingespritzt wird. Auf der Leiterplatte 13 sind eine erste Steuereinheit 14 und eine zweite Steuereinheit 15 angeordnet, wobei die erste Steuereinheit zur Ansteuerung des als ersten Verbrauchers, insbesondere der einen LED, und die zweite Steuereinheit zur Ansteuerung des zweiten Verbrauchers, insbesondere der anderen LED, dient. Dadurch, dass die Steuereinheiten 14, 15 auf der Leiterplatte 13 innerhalb des Betätigungselements 1 angeordnet sind, sind die Steuereinheiten 14, 15 vor äußeren Umwelteinflüssen geschützt, insbesondere dann, wenn das Gehäuse 3 staubdicht und/oder wasserdicht ausgebildet ist. Durch die vorteilhafte Anordnung der Steuereinheiten 14, 15 wird nur die Leiterplatte 13 benötigt und es kann auf separate Leiterplatten für die jeweiligen LEDs verzichtet werden. Hierdurch wird die Anzahl der Bauteile, insbesondere die Anzahl der Leiterplatten 13, verringert und gleichzeitig ein kompaktes und modulares Betätigungselement 1 geschaffen.

Ebenfalls sind die Steuereinheiten 14, 15 vor dem direkten Wärmeeinfluss der LED geschützt, wenn sich die LED und die Steuereinheit auf einer gemeinsamen Leiterplatte 13 direkt nebeneinander befinden. Bei dem erfindungsgemäßen Betätigungselement 1, sind die Steuereinheiten 14, 15 vor thermischen Einflüssen der LED geschützt, wenn die Steuereinheiten 14, 15 innerhalb des Betätigungselements 1 und die LEDs außerhalb des Betätigungselements 1 und somit getrennt zueinander angeordnet sind. Im vorliegenden Fall sind die LEDs in Reihe geschaltet, so dass die Steuereinheiten der LEDs auf der Leiterplatte 13 angeordnet werden können. Alternativ können die LEDs auch parallel geschaltet werden. Dies weist den Vorteil auf, dass beim Ausfall der einen LED die andere LED weiterhin funktioniert. Des Weiteren sind auf der Leiterplatte 13 ein der ersten Aufnahme 10 zugeordneter erster Anschlusskontakt 16, ein der zweiten Aufnahme 11 zugeordneter zweiter Anschlusskontakt 17 und ein der dritten Aufnahme 12 zugeordneter dritter Anschlusskontakt 18 angeordnet, wobei die Anschlusskontakte 16, 17, 18 auf die Leiterplatte 13 angelötet und mit nicht näher gezeigten Leiterbahnen verbunden sind. Dabei sind die Anschlusskontakte 16, 17, 18 platzsparend im Winkel von im Wesentlichen 90° gebogen, um ein kompaktes Betätigungselement 1 zu bilden.

Ferner ist auf der Leiterplatte 13 das als Mikrotaster ausgebildete Schaltelement 9 angeordnet, welches ebenfalls auf die Leiterplatte 13 angelötet und mit den Leiterbahnen verbunden ist.

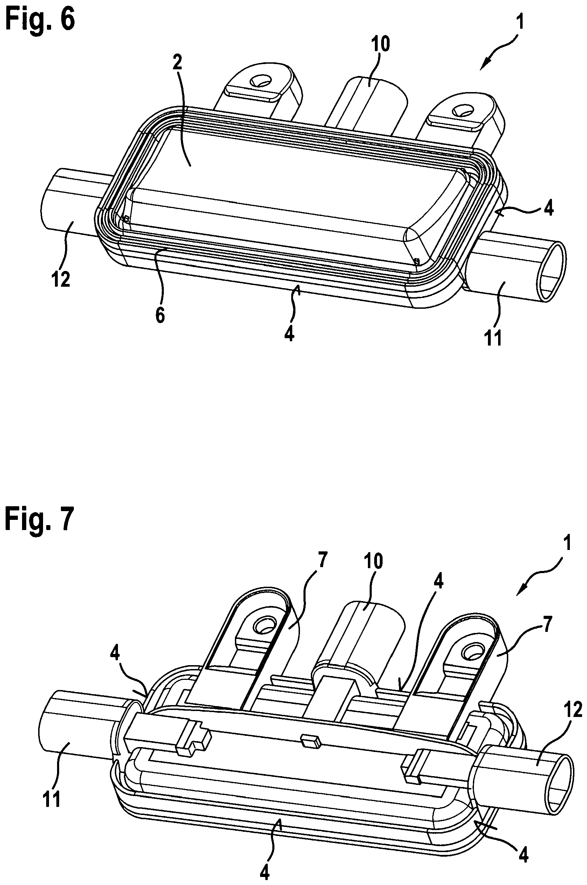

Das in den Figuren 6 und 7 gezeigte Ausführungsbeispiel gemäß einer zweiten Ausführungsform ist im Wesentlichen identisch zu dem oben beschriebenen ersten Ausführungsbeispiel, dargestellt in den Figuren 1 bis 5. Im Unterschied zu dem in den Figuren 1 und 2 visualisierten Ausführungsbeispiel sind gemäß dem zweiten Ausführungsbeispiel die zweite Aufnahme 11 und dritte Aufnahme 12 an der Seitenwand des Gehäuses 3 angeordnet bzw. angespritzt. Dementsprechend müssen auch die Anschlusskontakte 17, 18 auf der Leiterplatte 13 verlängert werden oder am äußeren Rand der Leiterplatte 13 angeordnet werden. Des Weiteren sind bei dem in den Figuren 6 und 7 gezeigten Betätigungselement die Laschen 7 jeweils benachbart und symmetrisch zu der ersten Aufnahme 10 angeordnet. Dies macht Sinn, wenn unterhalb der Bodenwand 5 des Betätigungselements 1 wenig oder kein Bauraum zur Verfügung steht, um das Betätigungselement 1 zu befestigen.

Das erfindungsgemäße Betätigungselement 1 wird vor allem bei Heckleisten eingesetzt, welche an einer Heckklappe eines Kraftfahrzeugs angeordnet sind. Dabei wird das Betätigungselement 1 mit Hilfe von Schrauben und der Laschen 7 an der Heckleiste befestigt. An der zweiten 11 und dritten Aufnahme12 werden Lichtquellen direkt angeordnet oder es werden die Lichtquellen über Steckelemente mit den jeweiligen Aufnahmen 11, 12 verbunden. Die Lichtquellen sind jeweils linkseitig und rechtseitig vom Betätigungselement 1 in der Heckleiste angeordnet und dienen zum Ausleuchten des Kennzeichens oder als Vorfeldbeleuchtung, um den Benutzer den Weg zum Fahrzeug sicherer zu gestalten.

Es ist ebenfalls denkbar, das erfindungsgemäße Betätigungselement 1 in einem Türaußengriff anzuordnen. Die Lichtquellen dienen in diesem Fall als Vorfeldbeleuchtung oder als Muldenbeleuchtung. Dabei können auch die Farben der LEDs unterschiedlich gewählt werden, um Fahrzeugzustände (Öffnen, Schließen) für den Benutzer darzustellen. Bei einem Türaußengriff wird das Betätigungselement 1 vorzugsweise mit einem kapazitiven Näherungsschalter versehen, welcher beim Annähern einer Hand die an der Lichtquelle angeordnete LED aktiviert und/oder ein kraftfahrzeugseitiges Schloss aktiviert.

Das Betätigungselement 1 bildet dabei eine Teilwandung des Türaußengriffs. Selbstverständlich ist es auch möglich bei Betätigung der Abdeckung 2 den Mikroschalter zu betätigen, welcher die oben beschriebene Funktion auslöst. Zusammenfassend gewährleistet die Erfindung einen modularen und kompakten sowie kostengünstigen Aufbau eines Betätigungselements 1.

### Bezugszeichenliste

- 1: Betätigungselement
- 2: Abdeckung
- 3: Gehäuse
- 4: Seitenwände
- 5: Bodenwand
- 6: Kragen
- 7: Laschen
- 8: Öffnungen
- 9: Schaltelement
- 10: Erste Aufnahme
- 11: Zweite Aufnahme
- 12: Dritte Aufnahme
- 13: Leiterplatte
- 14: Erste Steuereinheit
- 15: Zweite Steuereinheit
- 16: Erster Anschlusskontakt
- 17: Zweiter Anschlusskontakt
- 18: Dritter Anschlusskontakt

## Patentansprüche

1. Betätigungselement (1) für ein Kraftfahrzeug aufweisend ein Gehäuse (3) und eine Abdeckung (2), welche an dem Gehäuse (3) angeordnet ist, wobei bei einer Betätigung der Abdeckung (2) ein dem Betätigungselement (1) zugeordnetes Schaltelement (9) zur Aktivierung eines kraftfahrzeugseitigen Schlosses betätigbar ist und das Gehäuse (3) mindestens eine erste Aufnahme (10) aufweist, welche zum Anschluss eines ersten elektrischen Steckelements dient, welches das Schaltelement (9) mit einer Steuer- und/oder Auswerteeinheit verbindet, **dadurch gekennzeichnet, dass** das Gehäuse (3) mindestens eine zweite Aufnahme (11) aufweist, welche zum Anschluss eines zweiten Steckelements dient, welches mit einem ersten Verbraucher verbunden ist.

2. Betätigungselement (1) nach Anspruch 1, **dadurch gekennzeichnet, dass** das Gehäuse (3) eine dritte Aufnahme (12) aufweist, welche zum Anschluss eines dritten Steckelements dient, welcher mit einem zweiten Verbraucher verbunden ist.

3. Betätigungselement (1) nach Anspruch 2, **dadurch gekennzeichnet, dass** der Verbraucher als Lichtquelle, insbesondere als LED, ausgebildet ist.

4. Betätigungselement (1) nach Anspruch 2 oder 3, **dadurch gekennzeichnet, dass** die Steuereinheit für den ersten und/oder zweiten Verbraucher innerhalb des Gehäuses (3) in einem Innenraum des Betätigungselements angeordnet ist.

5. Betätigungselement (1) nach einem der Ansprüche 1 bis 4, **dadurch gekennzeichnet, dass** die erste Aufnahme (10) und/oder die zweite Aufnahme (11) und/oder die dritte Aufnahme (12) elektrisch innerhalb des Betätigungselements (1), insbesondere über ein Stanzgitter oder über auf einer Leiterplatte (13) angeordnete Leiterbahnen, miteinander verbunden sind.

6. Betätigungselement (1) nach einem der Ansprüche 1 bis 5, **dadurch gekennzeichnet, dass** die zweite (11) und/oder dritte Aufnahme (12) an einer Seitenwand (4) des Gehäuses (2) und/oder an einer Bodenwand (5) des Gehäuses (2) angeordnet ist.

7. Betätigungselement (1) nach einem der Ansprüche 1 bis 6, **dadurch gekennzeichnet, dass** die Verbraucher in Reihe oder parallel zueinander geschaltet sind.

8. Betätigungselement (1) nach einem der Ansprüche 1 bis 7, **dadurch gekennzeichnet, dass** das Schaltelement (9) als Mikroschalter oder als kapazitiver Näherungsschalter ausgebildet ist.

9. Heckleiste für ein Kraftfahrzeug mit einem Betätigungselement (1) nach Anspruch 1.

10. Türgriff für ein Kraftfahrzeug mit einem Betätigungselement (1) nach Anspruch 1.

## Claims

1. An actuation element (1) for a motor vehicle, having a housing (3) and a cover (2), which is arranged on the housing (3), it being possible to actuate a switching element (9), which is assigned to the actuation element (1), for activating a lock on the motor vehicle side when the cover (2) is actuated, and the housing (3) having at least one first socket (10) used for connecting a first electrical plug element that connects the switching element (9) to a control and/or evaluation unit, **characterised in that** the housing (3) has at least one second socket (11) used for connecting a second plug element that is connected to a first consumer.

2. The actuation element (1) according to claim 1, **characterised in that** the housing (3) has a third socket (12) used for connecting a third plug element that is connected to a second consumer.

3. The actuation element (1) according to claim 2, **characterised in that** the consumer is in the form of a light source, in particular an LED.

4. The actuation element (1) according to claim 2 or 3, **characterised in that** the control unit for the first and/or second consumers is arranged inside the housing (3) in an inner chamber of the actuation element.

5. The actuation element (1) according to any one of claims 1 to 4, **characterised in that** the first socket (10) and/or the second socket (11) and/or the third socket (12) are electrically connected to each other inside the actuation element (1), in particular via a lead frame or via conductor tracks arranged on a printed circuit board (13).

6. The actuation element (1) according to any one of claims 1 to 5, **characterised in that** the second (11) and/or third socket (12) is arranged on a side wall (4) of the housing (2) and/or on a bottom wall (5) of the housing (2).

7. The actuation element (1) according to any one of claims 1 to 6, **characterised in that** the consumers are series-connected or parallel-connected to each other.

8. The actuation element (1) according to any one of claims 1 to 7, **characterised in that** the switching element (9) is in the form of a microswitch or a capacitive proximity switch.

9. A rear trim strip for a motor vehicle, having an actuation element (1) according to claim 1.

10. A door handle for a motor vehicle, having an actuation element (1) according to claim 1.

## Revendications

1. Elément de commande (1) pour un véhicule automobile comportant un boîtier (3) et un capot (2), lequel est disposé sur le boîtier (3), un élément de connexion (9) attribué à l'élément de commande (1) pouvant être actionné lors d'un actionnement du capot (2) pour activer une serrure située sur le véhicule automobile et le boîtier (3) comportant au moins un premier logement (10), lequel sert au raccordement d'un premier élément connecteur électrique, lequel relie l'élément de connexion (9) à une unité de commande et/ou d'exploitation, **caractérisé en ce que** le boîtier (3) comporte au moins un deuxième logement (11), lequel sert au raccordement d'un deuxième élément connecteur qui est relié à un premier organe consommateur.

2. Elément de commande (1) selon la revendication 1, **caractérisé en ce que** le boîtier (3) comporte un troisième logement (12), lequel sert au raccordement d'un troisième élément connecteur qui est relié à un deuxième organe consommateur.

3. Elément de commande (1) selon la revendication 2, **caractérisé en ce que** l'organe consommateur est constitué comme source lumineuse, notamment comme une diode électroluminescente (DEL).

4. Elément de commande (1) selon la revendication 2 ou 3, **caractérisé en ce que** l'unité de commande pour le premier et/ou le deuxième organe consommateur est disposé à l'intérieur du boîtier (3) dans un compartiment intérieur de l'élément de commande.

5. Elément de commande (1) selon l'une quelconque des revendications 1 à 4, **caractérisé en ce que** le premier logement (10) et/ou le deuxième logement (11) et/ou le troisième logement (12) sont électriquement reliés l'un à l'autre à l'intérieur de l'élément de commande (1), notamment par une grille estampée ou par des réseaux de circuits imprimés disposés sur une plaquette de circuits imprimés (13).

6. Elément de commande (1) selon l'une quelconque des revendications 1 à 5, **caractérisé en ce que** le deuxième (11) et/ou le troisième logement (12) est disposé sur une paroi latérale (4) du boîtier (2) et/ou sur une paroi de fond (5) du boîtier (2).

7. Elément de commande (1) selon l'une quelconque des revendications 1 à 6, **caractérisé en ce que** les organes consommateurs sont connectés en série ou parallèlement l'un par rapport à l'autre.

8. Elément de commande (1) selon l'une quelconque des revendications 1 à 7, **caractérisé en ce que** l'élément de connexion (9) est constitué comme microrupteur ou comme détecteur de proximité capacitif.

9. Baguette arrière pour un véhicule automobile avec un élément de commande (1) selon la revendication 1.

10. Poignée de porte pour un véhicule automobile avec un élément de commande (1) selon la revendication 1.
